(19) **Europäisches Patentamt / European Patent Office / Office européen des brevets**

(11) **EP 4 668 486 A1**

(12) **EUROPEAN PATENT APPLICATION**
published in accordance with Art. 153(4) EPC

(43) Date of publication:
**24.12.2025 Bulletin 2025/52**

(21) Application number: **24756742.3**

(22) Date of filing: **06.02.2024**

(51) International Patent Classification (IPC):
**H01Q 19/06** (2006.01)

(52) Cooperative Patent Classification (CPC):
**H01Q 19/06**

(86) International application number:
**PCT/JP2024/003903**

(87) International publication number:
**WO 2024/171893 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 JP 2023020792**

(71) Applicants:
- **AGC INC.**
  **Chiyoda-ku,**
  **Tokyo 1008405 (JP)**
- **AGC Glass Europe**
  **1348 Louvain-La-Neuve (BE)**

(72) Inventors:
- **KUMAGAI, Akira**
  **Tokyo 100-8405 (JP)**
- **YOUSEFBEIKI, Mohsen**
  **1348  Louvain-la-Neuve (BE)**

(74) Representative: **AGC Glass Europe**
**Technovation Centre**
**Intellectual Property Department**
**Rue Louis Blériot 12**
**6041 Gosselies (BE)**

(54) **METHOD FOR SELECTING INTERFACE LAYER**

(57)  Provided is an antenna device that enables easy selection of the optimal interface layer. This method for selecting an interface layer includes selecting an interface layer of a wireless communication device that is provided in a window having window glass, the wireless communication device including an antenna that is provided to the window glass and is capable of scanning a beam angle, interface layers that are provided to the window glass, and a control unit, wherein the control unit scans the beam angle of the antenna, acquires a first angular distribution with respect to the beam angle of received power of radio waves arriving from a base station, estimates the angle of incidence of the radio waves on the basis of the first angular distribution, and selects the interface layer that corresponds to the result of estimating the angle of incidence.

EP 4 668 486 A1

## Description

[Technical Field]

The present disclosure relates to a method for selecting an interface layer.

[Background Art]

Conventionally, there has been an antenna device that is attached to a window glass for a building before use, the antenna device including an antenna, a waveguide member positioned on the outdoor side of the antenna, and a conductor positioned on the indoor side of the antenna, and when designating the distance between the antenna and the waveguide member as a and the relative permittivity of a medium formed by a dielectric member between the antenna and the waveguide member as $\varepsilon r$, a is greater than or equal to $(2.11 \times \varepsilon r - 1.82)$ mm. The antenna device further includes an alignment member that is attached directly to a glass sheet of the window glass (see, for example, Patent Document 1).

[Prior Art Documents]

[Patent Documents]

[Patent Document 1] WO 2019/177144

[Summary of the Invention]

[Problem to be Solved by the Invention]

Patent Document 1 does not disclose a method for selecting what type of matching member (interface layer) is optimal, with respect to a conventional antenna device. The transmittance of radio waves differs depending on the thickness and dielectric constant of the interface layer, and also differs depending on the incident angle. Furthermore, radio waves radiated from a base station are often reflected on the way and reach the window glass, making it very difficult to determine the direction from which the radio waves reach the window glass.

To address this, an object of the present invention is to provide a method for selecting an interface layer that allows easy selection of an optimal interface layer.

[Means for Solving the Problem]

A method for selecting an interface layer according to an embodiment of the present disclosure includes selecting an interface layer of a wireless communication device that is provided in a window having window glass, the wireless communication device including an antenna that is provided to the window glass and is capable of scanning a beam angle, interface layers that are provided to the window glass, and a control unit, wherein the control unit scans the beam angle of the antenna, acquires a first angular distribution with respect to the beam angle of received power of radio waves arriving from a base station, estimates the angle of incidence of the radio waves on the basis of the first angular distribution, and selects the interface layer that corresponds to the result of estimating the angle of incidence.

[Effects of the Invention]

It is possible to provide a method for selecting an interface layer that allows easy selection of an optimal interface layer.

[Brief Description of the Drawings]

FIG. 1 is a diagram illustrating, in plan view, one example of a building in which a window is installed, the window being provided with a wireless communication device including an antenna device to which a method for selecting an interface layer according to an embodiment is applied.

FIG. 2A is a diagram illustrating one example of a configuration of a wireless communication device and a window to which a method for selecting an interface layer of an embodiment can be applied.

FIG. 2B is a diagram schematically illustrating one example of the positional relationship between window glass, an interface layer, and an array antenna.

FIG. 3 is a diagram illustrating one example of a circuit configuration of a wireless device.

FIG. 4 is a diagram illustrating an elevation angle $\Theta$ and an azimuth angle $\Phi$ when the array antenna is disposed facing the horizontal direction.

FIG. 5 is a diagram illustrating one example of first transmission characteristics and second transmission characteristics.

FIG. 6 is a flowchart representing one example of a process performed by a method for selecting an interface layer.

FIG. 7A is a diagram illustrating one example of a state of scanning of a beam angle in step S1.

FIG. 7B is a diagram illustrating one example of an angular distribution $P(\Theta, \Phi)$ of indoor reception power and an angular distribution $P0(\Theta, \Phi)$ of outdoor reception power.

FIG. 8 is a diagram illustrating one example of calculation results of a simulation of an attenuation angular distribution $A(\Theta, \Phi)$, the power angular distribution $P(\Theta, \Phi)$ of indoor reception power, and the power angular distribution $P0(\Theta, \Phi)$ of outdoor reception power.

FIG. 9 is a diagram schematically illustrating one example of the positional relationship between window glass, a plurality of interface layers, and an array antenna in a variation of an embodiment.

[Mode for Carrying Out the Invention]

Hereinafter, an embodiment to which the method for selecting an interface layer of the present disclosure is applied will be described. In the following description, the same elements will be denoted by the same reference numerals, and duplicate explanations may be omitted.

In the following description, an XYZ coordinate system indicated by capital letters will be defined. The direction parallel to the X axis (X direction), the direction parallel to the Y axis (Y direction), and the direction parallel to the Z axis (Z direction) are orthogonal to each other. The XYZ coordinate system is one example of a Cartesian coordinate system. In addition, in the following description, the length, width, thickness, etc. of each part may be exaggerated to make the configuration easier to understand. Furthermore, terms such as parallel, right angle, orthogonal, horizontal, vertical, up and down, etc., allow for deviations to the extent that the effects of the embodiment are not impaired.

Furthermore, in the following description, "radio waves" refers to a type of electromagnetic wave, and generally, electromagnetic waves of 3 THz or less are called radio waves. Hereinafter, electromagnetic waves of 3 THz or less radiated from an outdoor base station or relay station will be referred to as "radio waves", and electromagnetic waves in general will be referred to as "electromagnetic waves".

It is preferable that the radio waves relayed by a wireless communication device to which the method for selecting an interface layer of the embodiment is applied are radio waves that are intended to be beamformed, such as millimeter wave band radio waves of the fifth generation mobile communication system (5G). The wireless communication device functions as a repeater that relays radio waves arriving from an outdoor base station or the like to indoors.

Furthermore, the radio waves relayed by a wireless communication device including an antenna device to which the method for selecting an interface layer of the embodiment is applied may be radio waves in the frequency band of 1 GHz to 6 GHz including Sub-6, LTE (Long Term Evolution), LTE-Advanced (LTE-A), UMB (Ultra Mobile Broadband), or CBRS (Citizens Broadband Radio Service). In addition, the radio waves relayed by the wireless communication device of the embodiment may be IEEE 802.11 (Wi-Fi (registered trademark)), IEEE 802.16 (WiMAX (registered trademark)), IEEE 802.20, UWB (Ultra-Wideband), Bluetooth (registered trademark), or LPWA (Low Power Wide Area), etc. Note that beamforming may be performed using radio waves in the frequency band of 1 GHz to 6 GHz including Sub-6, or Wi-Fi (registered trademark) radio waves.

A wireless communication device to which the method for selecting an interface layer of the embodiment is applied can be used as a repeater, and has a configuration that makes it possible to easily select the interface layer that maximizes the power of the radio waves received by the antenna (reception power). The details are explained below. The reception power is synonymous with the strength of the radio wave (reception strength).

<Embodiment>

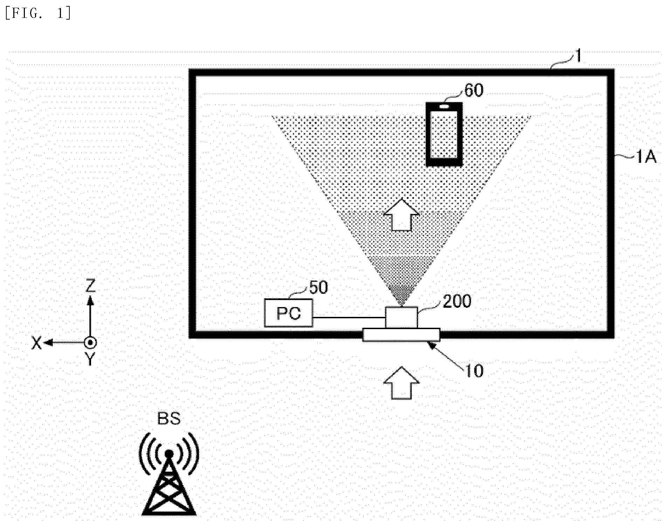

FIG. 1 is a diagram illustrating, in plan view, one example of a building 1 in which a window 10 is installed, the window being provided with a wireless communication device 200 including an antenna device to which a method for selecting an interface layer according to an embodiment is applied. In addition to the building 1 and the wireless communication device 200, FIG. 1 shows a base station BS, a PC (Personal Computer) 50, and a smartphone 60.

The building 1 may be a detached house, a building, an apartment building, or a commercial facility such as a shopping mall or a department store, an airport, a factory, a power facility, a government building, a station (station building), a bus stop building, etc. The window 10 is used in these buildings 1. The window 10 includes window glass and a window frame (the window frame on the building 1 side). The wireless communication device 200 functions as a repeater.

The antenna of the wireless communication device 200 is preferably provided on the window glass of the window 10, and parts other than the antenna may be provided on the window 10 or a wall 1A surrounding the window 10, the frame of a bay window, etc. Furthermore, parts other than the antenna may be provided at a location farther away from the window 10 than the wall 1A, the frame of the bay window, etc. The antenna of the wireless communication device 200 is an antenna of an antenna device included in the wireless communication device 200. Furthermore, parts of the wireless communication device 200 other than the antenna do not need to be fixed to the wall 1A around the window 10, the ceiling, or the frame of the bay window, etc., but may simply be placed on a flat location or the like, for example.

Millimeter wave band radio waves radiated from an outdoor base station BS enter indoors through only the window glass of the window 10 of the building 1, but due to the radio waves having high directivity, the radio waves only reach a portion of the indoors, making it easy for dead zones to occur. The window glass of the window 10 is an entrance for radio waves into the building 1.

It is difficult to create a good communication environment indoors for radio waves in the millimeter wave frequency band, and thus the wireless communication device 200 i provided to the window 10 to improve the reception environment and expand the communication area. Here, providing the wireless communication device 200 to the window 10 means that, as described above, the antenna is provided to the window glass, and parts other than the antenna may be provided on the window 10 or the wall 1A surrounding the window 10, the frame of a bay window, etc. When relaying radio waves, the wireless communication device 200 receives radio waves through the window glass of the window 10 through the antenna, amplifies the radio waves, and radiates the amplified radio waves to the indoors. In FIG. 1, the wireless communication device 200 is disposed on the indoor side of the window 10, but may also be disposed on the outdoor side of the window 10.

When relaying radio waves arriving from outside the window 10, the wireless communication device 200 amplifies the received radio waves and radiates the amplified radio waves to indoors at a prescribed radiation angle using an array antenna or the like. The amplified radio waves are radiated over a wide area indoors, making it easier for indoor terminals to receive the radio waves.

As one example, when relaying radio waves, the wireless communication device 200 may receive, amplify, and radiate radio waves of a plurality of frequencies. By relaying radio waves of a plurality of frequencies, the amplified radio waves can be radiated over a wider area indoors.

Furthermore, the millimeter wave radio waves are attenuated when transmitted through the window glass. In order to suppress the attenuation (loss) of radio waves, it is preferable to use an interface layer. By using the interface layer, when the wireless communication device 200 relays radio waves, the electrical length of the radio waves can be adjusted before or after being transmitted through the window glass to match the impedance, thereby reducing loss.

<Configuration of Wireless Communication Device 200 and Window 10>

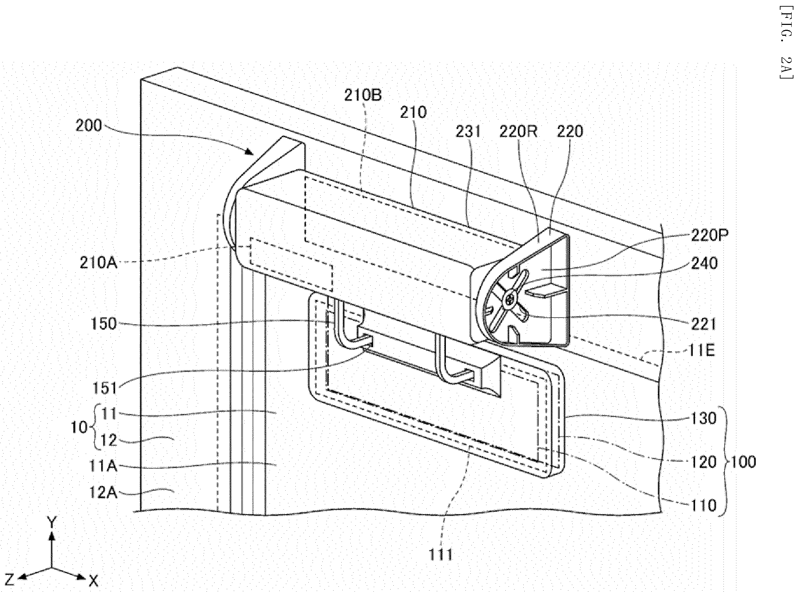

FIG. 2A is a diagram showing one example of a configuration of the wireless communication device 200 and the window 10. The wireless communication device 200 includes the antenna device 100 and is attached to the window 10. The window 10 includes window glass 11 and a window frame 12.

Here, the configuration of the window 10, the configuration of the wireless communication device 200, the attachment structure to the window 10, and the configuration of the antenna device 100 will be described in the stated order.

<Configuration of Window 10>

In the following description, as one example, a form in which the window 10 is a FIX window (fixed window) will be described, but the window may also be a freely openable sliding window, casement window, etc. Furthermore, the window glass 11 held by the window frame by may be one or a plurality of sheets of glass.

The window glass 11 has a main surface 11A on the indoor side and a main surface (not shown) on the outdoor side. The window glass 11 may be commonly available glass, and soda-lime glass, alkali-free glass, Pyrex (registered trademark) glass, quartz glass, etc. can be used. Furthermore, the window glass 11 is not limited to a glass sheet, but may be a surface material made of resin such as polycarbonate or acrylic, etc. The main surface on the outdoor side of the window glass 11 is the main surface on the side opposite to the main surface 11A on the indoor side.

The window frame 12 is a frame-shaped member that surrounds the edge of the window glass 11 and is made of metal such as aluminum, or a resin, etc. In the following description, one example will be described in which the window frame 12 is made of metal.

The window glass 11 and the window frame 12 of the window 10 are provided to a wall 1Athat is perpendicular to the horizontal plane. The main surface 11A on the indoor side of the window glass 11 is parallel to the surface 12A on the indoor side of the window frame 12, and the thickness (thickness in the Z direction) of the window glass 11 and the window frame 12 is constant.

<Configuration of the Wireless Communication Device 200 and Attachment Structure to the Window 10>

The wireless communication device 200 includes an antenna device 100, a waveguide 150, a wireless device 210, and a bracket 220. The waveguide 150 is one example of a transmission line. The bracket 220 is one example of a fixing tool. The wireless communication device 200 is provided to the indoor side of a building 1 (see FIG. 1) as one example. The wireless communication device 200 is a separate-type repeater in which the antenna device 100 and the wireless device 210 are separated and connected by the waveguide 150.

Note that here, as one example, a form is described in which the wireless communication device 200 includes the waveguide 150, but a transmission line such as the following may be used instead of the waveguide 150. For example, an FPC (Flexible Printed Circuit) transmission line having a transmission line such as a microstrip line (MSL) or a coplanar wave guide (CPW) formed on a flexible substrate made of polyimide or the like may be used. The FPC transmission line is one example of a transmission line that has a flexible substrate and a transmission line such as an MSL or CPW formed on the flexible substrate. Furthermore, a coaxial cable may be used instead of the waveguide 150.

Here, the XYZ coordinate system is defined based on the surface 12A on the indoor side of the window frame 12 to which the wireless device 210 is attached. The X axis is one example of a first axis, the Y axis is one example of a second axis, and the Z axis is one example of a third axis. The X direction is one example of a first axis direction, the Y direction is one example of a second axis direction, and the Z direction is one example of a third axis direction.

The surface 12A on the indoor side of the window frame 12 is a surface that includes the X direction and the Y direction. The surface 12A is parallel to the XY plane and is one example of a first surface. The Z direction is a direction perpendicularly away from the surface 12A, and is the direction normal to the surface 12A. The +Z direction side of the surface 12A is the indoor side. The Y direction of such an XYZ coordinate system is the direction connecting the wireless device 210 and the window glass 11. Furthermore, the X direction is the direction in which the window frame 12 extends along the outer edge 11E of the window glass 11 at the fixed position where the wireless device 210 is fixed to the window frame 12. The fixed position where the wireless device 210 is fixed to the window frame 12 is the position where two brackets 220 are attached to the frame-shaped window frame 12, and in FIG. 2A, the fixing position is part of the window frame 12 that is on the +Y direction side of the window glass 11 and extends in the X direction. The outer edge 11E of the window glass 11 is the outer edge when the window glass 11 is viewed in the XY plane (plane view), and the outer edge 11E of the window glass 11 at the fixed position where the wireless device 210 is fixed to the window frame 12 is the part of the outer edge 11E of the window glass 11 that is on the +Y direction side of the window glass 11 and extends in the X direction. Note that a form is described here in which the window glass 11 is rectangular in plan view and the window frame 12 is frame-shaped (rectangular ring-shaped) in plan view, but the window glass 11 is not limited to being rectangular in plan view, and may have a shape in which the outer edge 11E is curved, such as a circle or ellipse. In this case, the window frame 12 may be a frame-shaped member that surrounds the window glass 11 having such a curved outer edge 11E.

The X direction and Z direction in FIG. 2A are horizontal directions, and the XZ plane is parallel to the horizontal plane. The Y direction is the vertical direction, the +Y direction is the vertically upward direction, and the -Y direction is the vertically downward direction. In the following description, the +Y direction side is the upper side, and the -Y direction side is the lower side.

Two waveguides 150 are provided between the antenna device 100 and the wireless device 210. The two waveguides 150 are arranged in parallel with each other and spaced apart in the X direction, and have the same length. The relative positions of the antenna device 100 and the wireless device 210 in the X direction are defined by the two waveguides 150. As one example, a configuration may be adopted in which two types of radio waves (high frequency signals), i.e., horizontally polarized and vertically polarized, are guided.

The waveguide 150 has an end 151 connected to an array antenna 110 of the antenna device 100 and an end (not shown) connected to the wireless device 210, and guides the radio waves received by the antenna device 100. Note that here, as one example, a form is described in which the wireless communication device 200 includes two waveguides 150, but the number of the waveguide 150 may be one, or three or more. Note that, even when there is only one waveguide 150, the relative positions of the antenna device 100 and the wireless device 210 do not need to be adjusted in the X direction, and therefore the relative positions of the antenna device 100 and the wireless device 210 in the X direction would be determined by the one waveguide 150.

Note that, as described above, it is possible to use an FPC transmission line instead of the waveguide 150. In this case, for example, RF components such as an amplifier may be mounted on the transparent antenna device 100 side. Furthermore, the relative positions of the antenna device 100 and the wireless device 210 in the X direction would be defined by the FPC transmission line.

As one example, the waveguide 150 is a bendable waveguide that extends from the +Z direction side of a holder 130 that holds the array antenna 110 of the antenna device 100 to the +Z direction side, is bent in the +Y direction, and extends to the lower end of the wireless device 210. The waveguide 150 is almost inelastic, but can be bent at any position between the end 151 and the end connected to wireless device 210. Such a bendable waveguide 150 can be, for example, a flexible waveguide.

The wireless device 210 is fixed by screws 240 to the two brackets 220 attached to the surface 12A on the indoor side of the window frame 12. In other words, the wireless device 210 is attached to the surface 12A on the indoor side of the window frame 12 by two screws 240 and two brackets 220. The screw 240 is one example of a protrusion that protrudes in the X direction from a housing 231 of the wireless device 210. Note that, instead of the screw 240, a protrusion that is integrally formed with the housing 231 and protrudes in the X direction may be provided.

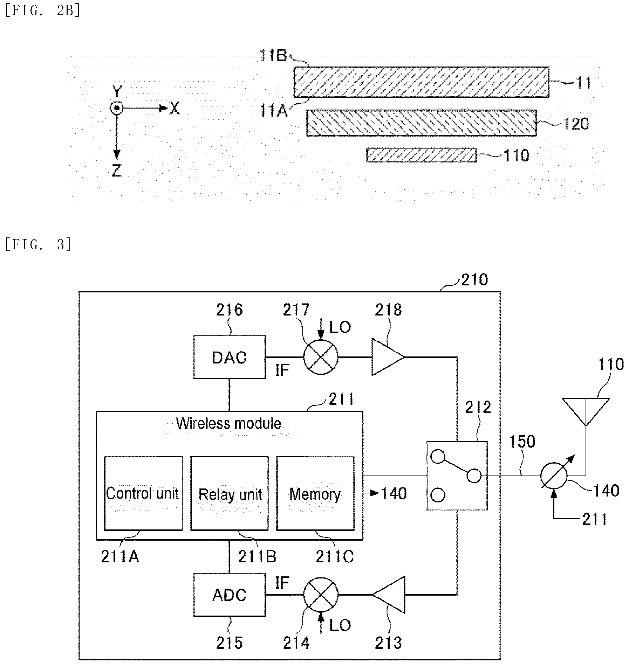

The wireless device 210 includes a wireless communication unit in addition to an array antenna 210A, a heat dissipation unit 210B, and the housing 231. The array antenna 210A, the heat dissipation unit 210B, and the wireless communication unit are disposed inside the housing 231. The housing 231 is, for example, a rectangular parallelepiped case made of resin. The housing 231 is fixed to the bracket 220 by the screws 240. The array antenna 210A is provided on the +Z direction side within the housing 231, and the heat dissipation unit 210B is provided on the -Z direction side within the housing 231. Here, the wireless communication unit is omitted. The wireless communication unit will be described later with reference to FIG. 3.

The wireless communication unit is connected to the end of the waveguide 150 (the end connected to the wireless device 210), and performs a process for amplifying the radio waves received from the antenna device 100 via the waveguide 150 and outputting the amplified radio waves to the array antenna 210A, a process for controlling the radiation direction in which the array antenna 210A radiates the radio waves, etc. For this reason, the wireless communication unit includes an amplifier, a microcomputer, etc. Furthermore, the wireless communication unit is connected to the heat dissipation unit 210B in a manner that allows thermal conduction, and dissipates heat via the heat dissipation unit 210B.

The heat dissipation unit 210B faces the surface 12A on the indoor side of the window frame 12 in a state in which the wireless device 210 is attached to the window frame 12 by the brackets 220. Therefore, the heat generated by the wireless communication unit can be dissipated to the window frame 12 from the heat dissipation unit 210B. Note that a member with high thermal conductivity may be provided between the heat dissipation unit 210B and the window frame 12.

As one example, the bracket 220 is fixed to the surface 12A on the indoor side of the window frame 12 via double-sided tape, as shown in FIG. 2A. The bracket 220 is made of resin, metal, or the like. The brackets 220 are provided one on each of the +X side and -X side of the housing 231 of the wireless device 210, and are arranged so as to sandwich the ±X-direction side ends of the wireless device 210 therebetween. Note that the brackets 220 may be fixed to the window frame 12 with screws or the like. In particular, fixing with screws is effective when the surface 12A of the window frame 12 is not a flat surface or when the material makes it difficult to fix the brackets with double-sided tape.

The bracket 220 has a flat plate part 220P, a rib 220R, and a guide groove 221. The guide groove 221 is one example of a guide part. The flat plate part 220P is a flat plate-shaped portion that is substantially parallel to the YZ plane. The flat plate part 220P has a substantially trapezoidal shape when viewed in the YZ plane. The flat plate part 220P is formed with a guide groove 221 that is X-shaped when viewed in the YZ plane. The rib 220R is formed around the flat plate part 220P that is substantially parallel to the YZ plane and in the vicinity of the guide groove 221 for reinforcement.

The guide groove 221 is an X-shaped groove that penetrates the flat plate part 220P in the X direction. The X-shape of the guide groove 221 extends in four directions at angles of 45 degrees to the Y axis and Z axis when viewed from the YZ plane.

When attaching the wireless communication device 200 to the window 10, arranging the wireless communication device on the indoor side of the building 1 (see FIG. 1) more easily protects the device from wind, rain, dust, etc., and makes it more possible to operate stably for a long period of time. Thus, the wireless communication device 200 is disposed indoors.

Furthermore, when the wireless communication device 200 is to be attached to the window 10, the antenna device 100 is preferably provided to a portion that overlaps with the window glass 11 in order to efficiently receive radio waves transmitted through the window glass 11. Therefore, in the embodiment, as one example, each part of the antenna device 100 is made transparent, and the antenna device 100 is attached to the window glass 11, thereby achieving efficient reception of radio waves propagating from outdoors and minimizing obstruction of the view of the window glass 11.

On the other hand, the wireless device 210 generates heat from the amplifier, microcomputer, etc. due to the amplification process, control of the array antenna 210A, etc., and thus, if attached to the window glass 11, the heat may cause damage or breakage of the window glass 11. Furthermore, it is difficult to make the wireless device 210 itself optically transparent. For reasons such as these, it is convenient to attach the wireless device 210 to the window frame 12. In particular, if the window frame 12 is made of metal, the heat generated by the wireless device 210 can be dissipated through the window frame 12.

For reasons such as described above, in the embodiment, the antenna device 100 is attached to the window glass 11 and the wireless device 210 is attached to the window frame 12. Here, as one example, a form will be described in which the antenna device 100 and the wireless device 210 are attached to the upper side (+Y direction side) of the window glass 11 and the window frame 12, respectively. However, the same also applies to a form in which the antenna device 100 and the wireless device 210 are attached to the lower side (-Y direction side) or lateral side (+X direction side or -X direction side) of the window glass 11 and the window frame 12, respectively.

<Configuration of Antenna Device 100>

The antenna device 100 includes an array antenna 110, an interface layer 120, and a holder 130. Here, as one example, a configuration including the array antenna 110 will be described as a configuration capable of beamforming. The array antenna 110 has a plurality of antenna elements arranged two-dimensionally in an XY plan view in order to perform beamforming. The array antenna 110 is one example of an antenna that can scan a beam angle. The interface layer 120 is one example of an interface layer provided to the window glass 11. A phase shifter that adjusts the phase of the radio wave is connected to each antenna element. The antenna device 100 includes a phase shifter, which will be described later with reference to FIG. 3.

The holder 130 that holds the array antenna 110 and the interface layer 120 is attached to the main surface 11A on the indoor side of the window glass 11 by, for example, double-sided tape. As one example, in such a configuration, the antenna device 100 is disposed on the indoor side of the window glass 11. Note that the phase shifter is also held by the holder 130.

<Array Antenna 110>

The array antenna 110 is arranged on the indoor side of the window glass 11 and is spaced apart from the window glass 11. The array antenna 110 is held by the holder 130 together with the interface layer 120 and the phase shifter, thereby being arranged spaced apart from the window glass 11.

The array antenna 110 is connected to the wireless device 210. The array antenna 110 and the radio device 210 need merely be connected by a transmission line capable of transmitting radio waves, and as one example, are connected by the waveguide 150. Furthermore, a cable is provided between the array antenna 110 and the radio device 210 in order for the wireless device 210 to transmit control signals and the like to the array antenna 110, but the cable omitted from the drawings.

The array antenna 110 receives radio waves that have been transmitted through the window glass 11 and the interface layer 120. Additionally, the radio waves radiated by the array antenna 110 are transmitted through the interface layer 120 and the window glass 11 to the outside of the building 1.

The array antenna 110 receives radio waves radiated from the outdoor base station BS or the like. As one example, the array antenna 110 is formed on the surface of the substrate 111 on the -Z direction side. The substrate is preferably transparent. Transparent here means transparent to visible light.

The array antenna 110 is preferably disposed near the window glass 11. This is due to it being easier for the array antenna to receive radio waves nearer to the window glass 11. The distance in the Z direction between the array antenna 110 and the main surface 11A on the indoor side of the window glass 11 is, for example, preferably about 2 mm to 50 mm, and more preferably 5 mm to 15 mm.

The substrate 111 is made of any material that is transparent to the radio waves radiated from the outdoor base station and that can support the array antenna 110. Being transparent to the radiated radio waves means that the transmission loss is, for example, 10 dB or less. The substrate 111 being transparent to the radiated radio waves means that the transmission loss of the substrate 111 is 10 dB or less, preferably 6 dB or less, more preferably 3 dB or less, and even more preferably 1 dB or less.

Furthermore, the substrate 111 may also be transparent to visible light. "Transparent" to visible light means that the luminous transmittance is at least 40% or more, preferably 60% or more, more preferably 70% or more, and even more preferably 80% or more. As one example, the substrate 111 is made of a resin base material. Examples of resin materials that satisfy the above conditions include acrylic resins such as polymethyl methacrylate, cycloolefin resins, polycarbonate resins, and polyethylene terephthalate (PET). Furthermore, the substrate 111 may be a glass sheet. As a glass plate that satisfies the above conditions, soda-lime glass, alkali-free glass, Pyrex (registered trademark) glass, quartz glass, etc. can be used.

The array antenna 110 is formed of a conductor. The antenna device 100 is disposed overlapping the window 10, and thus the array antenna 110 is desirably formed from a transparent conductive film such as zinc oxide (ZnO), tin oxide ($SnO_2$), tin-doped indium oxide (ITO), indium oxide-tin oxide (IZO), or the like, a metal nitride such as titanium nitride (TiN) or chromium nitride (CrN), or a low-e film for low-e (low emissivity) glass. However, the array antenna 110 may also be formed from a thin metal film such as copper, nickel, or gold. In the case of a metal thin film, it is preferable to make the film mesh-like from the viewpoint of visibility.

<Interface Layer 120>

The interface layer 120 is a plate-shaped member held by the holder 130 attached to the indoor side of the window glass 11. As one example, the upper end side and the lower end side of the interface layer 120 are held by the holder 130.

The interface layer 120 may be held by the holder 130 so as to be disposed in close contact with the window glass 11, or may be disposed between the window glass 11 and the array antenna 110.

The interface layer 120 is provided in order to adjust the electrical length of the radio waves incident on the array antenna 110 to match the impedance. The interface layer 120 can be made of polycarbonate, acrylic, COP (cycloolefin polymer), PET (polyethylene terephthalate), polystyrene, glass, or the like.

The interface layer 120 preferably has a thickness of 1 mm or more from the viewpoint of suppressing the occurrence of deflection. This is due to the risk that, if the interface layer 120 deflects, the characteristics for adjusting the electrical length of the radio waves will become non-uniform within the XY plane, which may cause variations in the degree of impedance matching.

The thickness of the interface layer 120 in the Z direction is, for example, constant throughout. From the viewpoint of increasing the luminous transmittance, the thickness of the interface layer 120 is preferably 20 mm or less, and more preferably 15 mm or less. Furthermore, the thickness of the interface layer 120 is more preferably 1 mm to 12 mm. The interface layer 120 may be a single layer, or may be a stack of a plurality of layers, or a plurality of layers arranged at intervals.

The interface layer 120 adjusts the electrical length of the radio waves incident on the array antenna 110, and therefore the effective thickness varies depending on the relative dielectric constant. This is because the degree of the effect of shortening the wavelength of radio waves differs depending on the relative dielectric constant. Therefore, from the viewpoint of matching the impedance of radio waves, the effective thickness of the interface layer 120 should be set to an appropriate effective thickness that allows impedance matching.

The interface layer 120 has a size that allows the layer to face the array antenna 110 when viewed in the XY plane. A size that allows the layer to face the array antenna 110 in the XY plane means a size that is larger than the array antenna 110 in the XY plane and can cover an area of the radio waves radiated from the array antenna 110 where the radiation intensity is greater than or equal to the intensity required for wireless communication.

<Holder 130>

The holder 130 is attached to the main surface 11A on the indoor side of the window glass 11 and, as one example, holds the upper end and lower end of the interface layer 120. The holder 130 is made of transparent glass or resin. Transparent here means transparent to visible light. Note that the holder 130 is not limited to a configuration that holds the upper end and lower end of the interface layer 120, but may be a configuration that holds the +X direction side and the -X direction side, for example.

The holder 130 holds the array antenna 110 and the interface layer 120. The holder 130 has a configuration in which the interface layer 120 is freely insertable/-removable (freely attachable/detachable), and a plurality of types of the interface layer 120 can be attached to the holder 130 while being replaced one by one.

<Positional Relationship between Window Glass 11, Interface Layer 120, and Array Antenna 110>

FIG. 2B is a diagram schematically illustrating one example of the positional relationship between the window glass, interface layer 120, and array antenna 110. FIG. 2B shows the main surface 11B of the window glass 11 on the side opposite to the main surface 11A on the indoor side. The main surface 11B is the main surface on the outdoor side of the window glass 11. In FIG. 2B, the holder 130 is omitted.

The interface layer 120 is disposed on the indoor side (+Z direction side) of the window glass 11. The interface layer 120 may be in close contact with the main surface 11B of the window glass 11 while being held by the holder 130, or may be spaced apart from the main surface 11A as shown in FIG. 2B. Close contact means that the surface of the interface layer 120 on the -Z direction side is in contact (surface-to-surface contact) with the main surface 11B, and the interface layer 120 may be attached to the main surface 11B with double-sided tape, adhesive, etc., but does not need to be attached. For example, a state in which the interface layer 120 is stuck to the main surface 11B due to static electricity is also included in the term "close contact".

The array antenna 110 is spaced apart from the interface layer 120 and positioned on the -Z direction side of the interface layer 120 in a state where the array antenna is held by the holder 130.

The array antenna 110 and the interface layer 120 are arranged on the indoor side of the window glass 11 by the holder 130, which is not shown in FIG. 2B. The interface layer 120 can be inserted into and removed from (freely insertable/removable) the holder 130, and thus the reception power of radio waves at the array antenna 110 can be measured by a PC 50 while replacing the plurality of types of interface layers 120 one by one.

<Wireless Device 210>

The wireless device 210 will be described using FIG. 3 in addition to FIG. 2A. FIG. 3 is a diagram illustrating one example of a circuit configuration of the wireless device 210. FIG. 3 shows the configuration of a portion of the overall configuration of the wireless device 210 that corresponds to one array antenna 110. Each of the plurality of antenna elements of the array antenna 110 is connected to the wireless device 210 via the phase shifter 140. The phase shifter 140 is a set of a plurality of phase shifters connected to each antenna element of the array antenna 110, which is a set of a plurality of antenna elements.

If the distance between the array antenna 110 and the wireless device 210 is long, the transmission loss of radio waves between the array antenna 110 and the wireless device 210 increases. Therefore, in order to reduce transmission loss of radio waves, it is preferable to attach the wireless device 210 to the window glass 11 or to the wall 1A or ceiling around the window 10, or the like.

In addition, in order to reduce the transmission loss of radio waves between the array antenna 110 and the wireless device 210, a bendable waveguide 150 is used as a transmission line connecting the array antenna 110 and the wireless device 210, as one example. By using the bendable waveguide 150, radio waves can be propagated efficiently between the array antenna 110 and the radio device 210 with little transmission loss.

The wireless device 210 includes a wireless module 211, a switch 212, a low noise amplifier (LNA) 213, a mixer 214, an analog to digital converter (ADC) 215, a digital to analog converter (DAC) 216, a mixer 217, and a power amplifier (PA) 218. The wireless module 211 to the PA 218 are one example of the wireless communication unit of the wireless device 210.

The wireless module 211 is configured by an MCU (Micro Controller Unit) as one example, and has a control unit 211A, a relay unit 211B that performs relay processing, and a memory 211C. The control unit 211A and the relay unit 211B are functional blocks representing the functions executed by the MCU. The memory 211C is a functional representation of the memory of the MCU. The memory 211C is one example of a storage unit. In the wireless communication device 200, the antenna device 100 and the wireless device 210 are separated, and connected by the waveguide 150 and a cable (not shown). The antenna device 100 has an array antenna 110, the wireless device 210 has a wireless module 211, and the wireless module 211 has a control unit 211A. The array antenna 110 and the control unit 211A are arranged separately and are connected via a cable (not shown). The array antenna 110 and the control unit 211A being arranged separately means, for example, that the array antenna 110 and the control unit 211A are arranged in separate locations, such that the antenna device 100 having the array antenna 110 is arranged on the window glass 11 and the wireless device 210 including the control unit 211A is arranged on the window frame 12.

When receiving radio waves through the array antenna 110, the control unit 211A switches the three-terminal switch 212 to connect the array antenna 110 and the LNA 213. Furthermore, when transmitting radio waves through the array antenna 110, the control unit 211A switches the three-terminal switch 212 to connect the array antenna 110 and the PA 218.

In addition, when the array antenna 110 receives radio waves and when the array antenna 110 transmits radio waves, the control unit 211A controls the phase change amount by which the phase shifter 140 changes the phase of the radio waves, and controls the angle of the beam (beam angle). At such time, the control unit 211A transmits a control signal for controlling the phase change amount to the phase shifter 140 via a cable (not shown). Controlling the beam angle is synonymous with controlling the beam direction.

Furthermore, when selecting the optimal interface layer 120, the control unit 211A performs a process such as the following. The control unit 211A scans the beam angle of the array antenna 110 and acquires a first angular distribution of the reception power of radio waves arriving from the base station BS with respect to the beam angle.

In addition, the control unit 211A estimates a second angular distribution of the reception power of the radio waves arriving from the base station BS with respect to the beam angle in a state where the window glass 11 is not present, on the basis of the acquired first angular distribution and the first transmission characteristics stored in the memory 211C, and estimates the incident angle of the radio waves using the second angular distribution. Note that the first transmission characteristics will be described later.

Furthermore, the control unit 211A selects the optimal interface layer 120 on the basis of the estimated incident angle and the second transmission characteristics stored in the memory 211C. Note that the second transmission characteristics will be described later.

In this manner, the control unit 211A estimates the incident angle of the radio waves using the second angular distribution and selects the optimal interface layer 120 on the basis of the estimated incident angle, or in other words, the control unit 211A estimates the incident angle of the radio waves based on the first angular distribution and selects the interface layer 120 according to estimation results of the incident angle.

The relay unit 211B includes, as one example, a Wi-Fi (registered trademark) communication unit, is connected to the array antenna 210A, and transmits the digital signal input from the ADC 215 from the array antenna 210A to the inside of the building 1. The relay unit 211B transmits a signal to the inside of the building 1 via the array antenna 210A, thereby relaying the radio waves received by the array antenna 110 from the base station BS, and radiating the radio waves into the inside of the building 1 where the wireless communication device 200 is disposed. This allows radio waves to be radiated over a wide area inside the building 1, making it easier for devices such as smartphones 60 inside the building to receive the radio waves. Note that communication unit that radiates radio waves that are relayed to the indoor side by the relay unit 211B is not limited to Wi-Fi, and may be Bluetooth (registered trademark) or the like.

The memory 211C stores first transmission characteristics that associate the type of window glass 11, the incident angle on the window glass 11, and the transmittance of radio waves transmitted through the window glass 11. Furthermore, the memory 211C stores second transmission characteristics that associate the type of window glass 11 and interface layer 120, the incident angle on the window glass 11, and the transmittance of radio waves transmitted through the window glass 11 and the interface layer 120.

The LNA 213 is provided between the switch 212 and the mixer 214, amplifies the radio waves received by the array antenna 110, and outputs the amplified signals while preventing deterioration of the signal-to-noise ratio.

The mixer 214 mixes the radio waves output from the LNA 213 with a local signal (Lo) to demodulate the radio waves, and outputs an IF (Intermediate Frequency) signal. By converting the waves into an IF signal, digital conversion can be easily performed by the ADC 215.

The ADC 215 performs digital conversion on the IF signal output from the mixer 214 and outputs the result to the wireless module 211.

When the wireless communication device 200 transmits a signal from the array antenna 110, the DAC 216 performs analog conversion on the signal output by the wireless module 211 and outputs the IF signal to the mixer 217.

The mixer 217 mixes the IF signal with a local signal (Lo) to modulate the signal, and outputs the modulated signal to the PA 218.

The PA 218 amplifies the signal output from the mixer 217 and outputs the result to the array antenna 110 via the switch 212.

The phase shifter 140 is a set of a plurality of phase shifters connected to each antenna element of the array antenna 110, which is a set of a plurality of antenna elements. The phase change amount that phase shifter 140 imparts to the radio waves is controlled by the control unit 211A. The phase shifter 140 can be made of, for example, LC (Liquid Crystal).

Note that, in practice, the switch 212 and a plurality of the phase shifters 140 are connected via a distributor or the like to correspond to the number of phase shifters 140, which is the same as the number of the plurality of antenna elements of the array antenna 110. Note that when the array antenna 110 performs beamforming of radio waves in two polarization directions, two sets of the array antenna 110, distributor, ADC 215, DAC 216, switch 212, LNA 213, mixer 214, mixer 217, and PA 218 are connected in parallel.

<Measurement of Reception Power at PC 50>

The PC 50 (see FIG. 1) is connected to the wireless device 210 in order to measure the reception power of the array antenna 110. As one example, the PC 50 measures the strength of the digital signal output from the ADC 215 (see FIG. 3) to the wireless module 211. The digital signal output from the ADC 215 is a signal obtained by performing digital conversion on the IF signal output from the mixer 214, and the strength of this digital signal corresponds to the reception power of the radio waves at the array antenna 110. Therefore, if the strength of the digital signal is measured with the PC 50, it is possible to measure the reception power of the radio waves at the array antenna 110.

Furthermore, it is possible to attach a plurality of types of interface layers 120 one by one to the holder 130, and thus, if the reception power of the array antenna 110 in a state in which each interface layer 120 is attached to the holder 130 is measured by the PC 50, it is possible to find the interface layer 120 that provides the maximum reception power. The interface layer 120 that maximizes the reception power is the optimal interface layer 120.

By selecting the optimal interface layer 120 and attaching said layer to the holder 130, the wireless communication device 200 can relay outdoor radio waves to indoors in a state optimized by the optimal interface layer 120. After the optimal interface layer 120 has been selected and attached to the holder 130, the PC 50 may be removed from the wireless communication device 200. This is due to the PC 50 connecting to the wireless communication device 200 in order to measure the reception power of the array antenna 110 when selecting the optimal interface layer 120. Thereafter, the wireless communication device 200 optimized by the optimal interface layer 120 can be used. Note that, here, a form is described in which the reception power of radio waves is measured at the PC 50, and the optimal interface layer 120 is selected, but this may be performed on a smartphone 60 instead of the PC 50. For example, an application program for selecting the optimal interface layer 120 may be installed on the smartphone 60, and it may be made possible to select the optimal interface layer 120 by the application program executing processing.

<Elevation Angle $\Theta$ and Azimuth Angle $\Phi$ for Array Antenna 110>

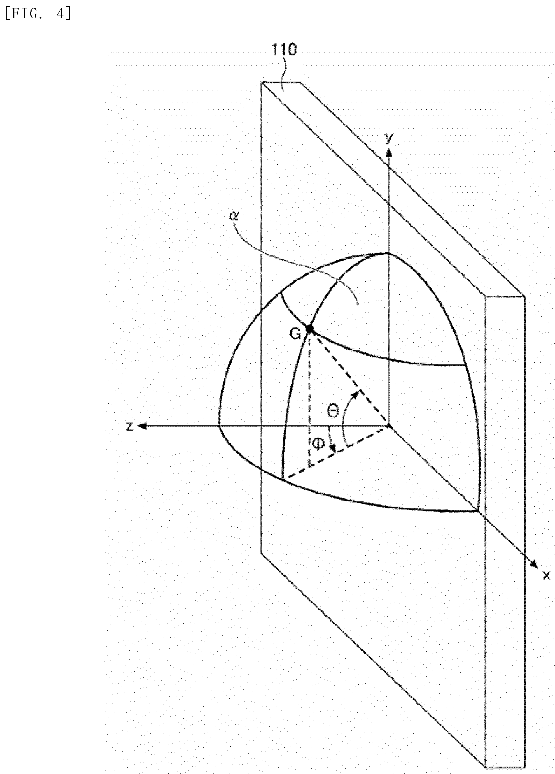

FIG. 4 is a diagram illustrating an elevation angle $\Theta$ and an azimuth angle $\Phi$ when the array antenna 110 is disposed facing the horizontal direction. In FIG. 4, the xyz coordinate system shown in lowercase letters will be used for explanation. The +x direction corresponds to the -X direction in FIG. 2A, the +y direction corresponds to the +Y direction in FIG. 2A, and the +z direction corresponds to the -Z direction in FIG. 2A. The XYZ coordinate system shown in FIG. 2A is based on the surface 12A on the indoor side of the window frame 12, whereas the xyz coordinate system in FIG.4 is based on the transmission/reception plane of the array antenna 110. The transmission/reception plane of the array antenna 110 is an imaginary plane on which the plurality of antenna elements of the array antenna 110 are arranged and on which the array antenna 110 transmits and receives radio waves.

In FIG. 4, the xz plane is the horizontal plane. In FIG. 4, the origin of the xyz coordinate system is the center of the transmission/reception plane of the array antenna 110, and the transmission/reception plane of the array antenna 110 is positioned on the xy plane. Orienting the array antenna 110 in the horizontal direction means that the line normal to the transmission/reception plane of the array antenna 110 is oriented in the horizontal direction, which corresponds to the state in which the array antenna 110 is attached to the window glass 11 as shown in FIG. 2A.

Here, the incident angle of the radio waves to the array antenna 110 will be described using a transmission point G. The transmission point G is a point positioned in the direction of arrival of the radio waves incident toward the center of the transmission/reception plane of the array antenna 110 (the origin of the xyz coordinate system).

The elevation angle $\Theta$ and the azimuth angle $\Phi$ are as shown in FIG. 4. Specifically, the elevation angle $\Theta$ is the elevation angle of the transmission point G with respect to the horizontal plane (xz plane) within a plane $\alpha$ that includes the transmission point G and the origin of the xyz coordinate system and is perpendicular to the horizontal plane (xz plane). Furthermore, the azimuth angle $\Phi$ is the angle formed by the plane $\alpha$ that includes the transmission point G and the origin of the xyz coordinate system and is perpendicular to the horizontal plane (xz plane) and the +z direction in the xz plan view (horizontal plan view).

The incident angle of radio waves incident on the array antenna 110 can be expressed by the elevation angle $\Theta$ and the azimuth angle $\Phi$.

<First Transmission Characteristics and Second Transmission Characteristic>

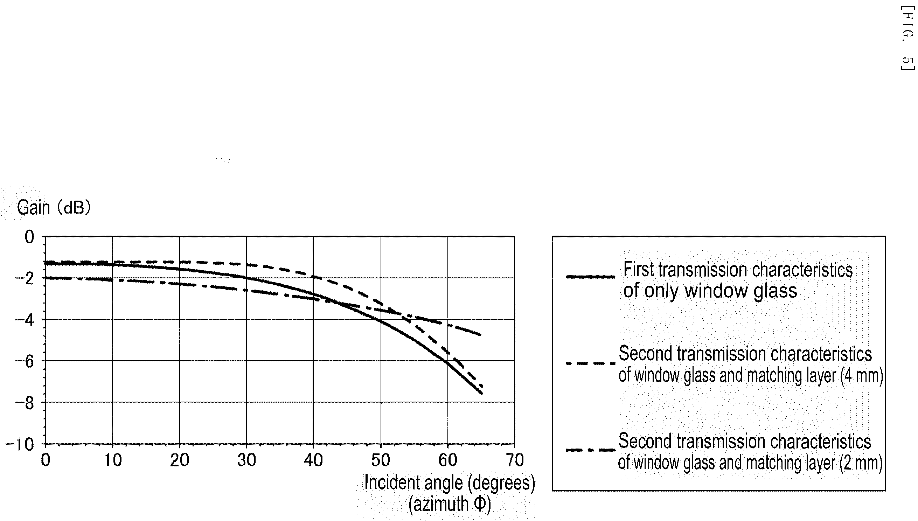

FIG. 5 is a diagram illustrating one example of first transmission characteristics and second transmission characteristics. The first transmission characteristics indicated by the solid line are the characteristics of the transmittance of radio waves transmitted through only the window glass 11 with respect to the incident angle. The second transmission characteristics are the characteristics of the transmittance of radio waves transmitted through both the window glass 11 and the interface layer 120 with respect to the incident angle. The second transmission characteristics shown by the dashed line are, as one example, the second transmission characteristics when the thickness of the interface layer 120 is 4 mm, and the second transmission characteristics shown by the dash-dotted line are, as one example, the second transmission characteristics when the thickness of the interface layer 120 is 2 mm.

In FIG. 5, the horizontal axis represents the incident angle, and the vertical axis represents the gain (dB) of the radio waves transmitted through the window glass 11 or the gain (dB) of the radio waves transmitted through the window glass 11 and the interface layer 120. The gain (dB) of the transmitted radio waves corresponds to the transmittance. In FIG. 5, the value of the vertical axis corresponding to the transmittance is shown by a value obtained by converting the value into gain. When the gain is 0 dB, the transmittance is 100%.

The incident angle (degrees) of the horizontal axis is either the elevation angle Θ or the azimuth angle Φ, and in this description, the incident angle is assumed to be the azimuth angle Φ. The direction in which the elevation angle Θ and the azimuth angle Φ are 0 degrees is the +z direction in FIG. 4. Furthermore, the first transmission characteristics and the second transmission characteristics show symmetrical characteristics in the positive angle range and the negative angle range with respect to the direction in which the incident angle is 0 degrees, and thus FIG. 5 shows the positive angle range from 0 degrees to 70 degrees. Furthermore, due to the symmetry of the window glass 11 in the XY plane, the first transmission characteristics exhibit symmetrical characteristics between the positive angle range and the negative angle range of the elevation angle Θ. Similarly, the second transmission characteristics exhibit symmetric characteristics in the positive and negative angular ranges of the elevation angle Θ. For this reason, FIG. 5 shows only the positive angle range where the azimuth angle Φ of the first transmission characteristics and second transmission characteristics is from 0 degrees to 70 degrees.

In FIG. 5, the first transmission characteristics (solid line) are the characteristics of the transmittance of radio waves transmitted through only the window glass 11 with respect to the incident angle, and the figure shows that when the incident angle is 0 degrees, a loss of approximately 1.2 dB occurs when converted into gain. The first transmission characteristics gradually decrease as the incident angle increases, and the rate of decrease becomes large when the incident angle exceeds approximately 30 degrees.

Furthermore, as one example, the second transmission characteristics (dashed line) when the thickness of the interface layer 120 is 4 mm has a slightly larger gain than the first transmission characteristics (solid line) when the incident angle is 0 degrees, and the decrease in gain is relatively small up to an incident angle of around 40 degrees. Additionally, as one example, the second transmission characteristics (dashed line) when the thickness of the interface layer 120 is 4 mm is lower than the second transmission characteristics (dash-dotted line) when the thickness of the interface layer 120 is 2 mm if the incident angle is approximately 52 degrees or greater.

Moreover, the second transmission characteristics (dash-dotted line) when the thickness of the interface layer 120 is 2 mm, for example, has a slightly smaller gain than the first transmission characteristics (solid line) when the incident angle is 0 degrees, and the decrease in gain as the incident angle increases is gradual, but when the incident angle is approximately 43 degrees or less, the gain is smaller than the first transmission characteristics (solid line). As one example, the second transmission characteristics (dash-dotted line) when the thickness of the interface layer 120 is 2 mm has a smaller gain than the second transmission characteristics (dashed line) when the thickness of the interface layer 120 is 4 mm at an incident angle of approximately 52 degrees or less, but when the incident angle exceeds approximately 52 degrees, the gain is larger than the second transmission characteristics (dashed line) when the thickness of the interface layer 120 is 4 mm.

In the first transmission characteristics (solid line) and the two second transmission characteristics (dashed line and dash-dotted line) shown in FIG. 5, it can be seen that when the incident angle is less than or equal to approximately 52 degrees, the interface layer 120 having a thickness of 4 mm is the optimal interface layer 120, and when the incident angle is greater than approximately 52 degrees, the interface layer 120 having a thickness of 2 mm is the optimal interface layer 120.

<Estimating Reception Power when Window Glass 11 is not Present>

The window 10 having the window glass 11 is attached to the building 1, and thus it is difficult to measure the reception power at the array antenna 110 of radio waves arriving at the window 10 from the base station BS when the window glass 11 is not present.

However, by doing the following, it is possible to estimate the reception power at the array antenna 110 of radio waves arriving at the window 10 from the base station BS when the window glass 11 is not present. When the window glass 11 is not present, the reception power at the array antenna 110 of the radio waves arriving at the window 10 from the base station BS corresponds to the reception power of the radio waves incident on the main surface 11B (see FIG. 2B) on the outdoor side of the window glass 11.

The reception power of the radio waves transmitted through only the window glass 11 can be measured by the PC 50 in a state where the interface layer 120 is not inserted into the holder 130 that holds the interface layer 120 so as to be freely insertable/removable. When the interface layer 120 is not inserted into the holder 130, if the control unit 211A controls the phase change amount of the phase shifter 140 to scan the beam angle received by the array antenna 110, it is possible to obtain the angular distribution of the reception power of radio waves that have been transmitted through only the window glass 11.

Furthermore, in FIG. 5, if adding the gain reduction amount when the radio waves have been transmitted through the window glass 11 to the reception power of the radio waves that have passed through only the window glass 11 using the first transmission characteristics shown by the solid line, it is possible to estimate the reception power when the window glass 11 is not present. If adding the gain reduction amount for all incident angles in the angular distribution of the reception power of radio waves that have been transmitted through only the window glass 11, it is possible to estimate the angular distribution of the reception power with respect to the incident angle when the window glass 11 is not present. The angular distribution of the reception power with respect to the incident angle when the window glass 11 is not present is the angular distribution of the power of the radio waves incident on the main surface 11B (see FIG. 2B) on the outdoor side of the window glass 11.

Additionally, in the angular distribution of the reception power with respect to the incident angle when the window glass 11 is not present, the incident angle at which the reception power is maximum can be estimated as the incident angle of the radio waves on the window glass 11 and the array antenna 110.

Furthermore, if using the second transmission characteristics for the plurality of interface layers 120, it is possible to select the interface layer 120 that provides the maximum reception power for the estimated incident angle of the radio waves as the optimal interface layer 120.

In this manner, to select the optimal interface layer 120, data representing the first transmission characteristics shown in fig. 5 and the second transmission characteristics when a plurality of types of the interface layer 120 are used may be stored in memory 211C.

Here, the angular distribution of the reception power of radio waves that have been transmitted through only the window glass 11 is defined as $P(\Theta, \Phi)$, the angular distribution of the gain reduction amount obtained by converting the first transmission characteristics into the gain reduction amount is defined as $A(\Theta, \Phi)$, and the angular distribution of the reception power with respect to the incident angle when the window glass 11 is not present is defined as $P0(\Theta, \Phi)$.

$P(\Theta, \Phi)$ is the angular distribution of reception power actually measured on the indoor side of the window glass 11, and thus may be referred to as the angular distribution $P(\Theta, \Phi)$ of indoor reception power hereinafter. The angular distribution $P(\Theta, \Phi)$ of indoor reception power is one example of a first angular distribution of reception power of radio waves arriving from the base station BS with respect to the beam angle.

The angular distribution $A(\Theta, \Phi)$ of the gain reduction amount is the angular distribution of the power attenuation (loss) amount when being transmitted through the window glass 11, and therefore may be referred to as the attenuation angular distribution $A(\Theta, \Phi)$ hereinafter. The attenuation angular distribution $A(\Theta, \Phi)$ is one example of first transmission characteristics and is stored in the memory 211C. In the angular distribution $A(\Theta, \Phi)$ of the gain reduction amount, the power attenuation (loss) amount when transmitted through the window glass 11 is expressed as gain (dB).

Furthermore, $P0(\Theta, \Phi)$ is the angular distribution of the power of the radio waves incident on the main surface 11B (see FIG. 2B) on the outdoor side of the window glass 11, and thus may be referred to as the angular distribution $P0(\Theta, \Phi)$ of the outdoor reception power hereinafter. The angular distribution $P0(\Theta, \Phi)$ of outdoor reception power is an estimated value. The angular distribution $P0(\Theta, \Phi)$ of outdoor reception power is one example of a second angular distribution of the reception power of radio waves arriving from the base station BS with respect to the beam angle in a state where the window glass 11 is not present.

<Flowchart>

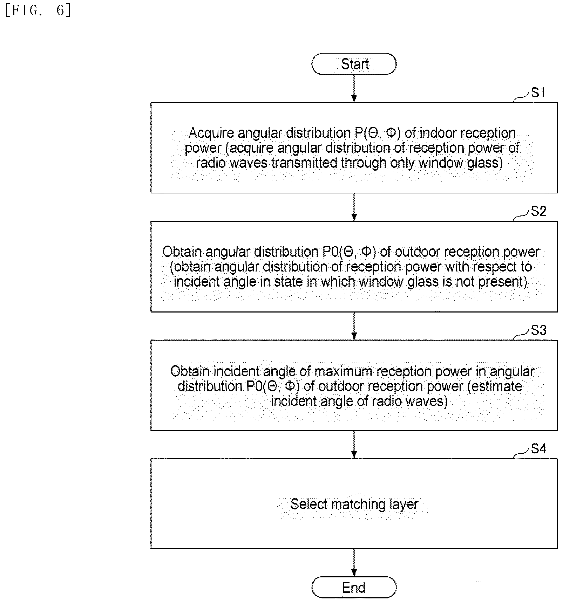

FIG. 6 is a flowchart representing one example of a process performed by a method for selecting an interface layer.

First, the control unit 211A acquires the angular distribution $P(\Theta, \Phi)$ of the indoor reception power (step S1). More specifically, when the interface layer 120 is not inserted into the holder 130, the control unit 211A controls the phase change amount of the phase shifter 140 to scan the beam angle received by the array antenna 110, and causes the PC 50 to measure the reception power, thereby acquiring the angular distribution $P(\Theta, \Phi)$ of the reception power of radio waves transmitted through only the window glass 11.

Next, the control unit 211A reads out the attenuation angular distribution $A(\Theta, \Phi)$ (first transmission characteristics) from the memory 211C, and obtains the angular distribution $P0(\Theta, \Phi)$ of the outdoor reception power on the basis of the angular distribution $P(\Theta, \Phi)$ of the indoor reception power acquired in step S1 and the attenuation angular distribution $A(\Theta, \Phi)$ (step S2). In other words, by adding the attenuation angular distribution $A(\Theta, \Phi)$ representing the gain reduction amount to the attenuation angular distribution $A(\Theta, \Phi)$ acquired in step S1, the angular distribution $(P0(\Theta, \Phi))$ of the reception power with respect to the incident angle when the window glass 11 is not present is obtained.

The angular distribution $P0(\Theta, \Phi)$ can be obtained in the following equation (1) by using the angular distribution $P(\Theta, \Phi)$ of indoor reception power and the attenuation angular distribution $A(\Theta, \Phi)$.

$$P0(\Theta, \Phi) = P(\Theta, \Phi) - A(\Theta, \Phi) \quad (1)$$

In equation (1), the reason that the attenuation angular distribution $A(\Theta, \Phi)$ is subtracted from the power angular distribution $P(\Theta, \Phi)$ of indoor reception power is due to $P(\Theta, \Phi)$ and the attenuation angular distribution $A(\Theta, \Phi)$ being expressed by negative values as decibel values. By performing the subtraction according to equation (1), the attenuation angular distribution $A(\Theta, \Phi)$ representing the gain reduction amount is added to the attenuation angular distribution $A(\Theta, \Phi)$ acquired in step S1. The angular distribution $P0(\Theta, \Phi)$ of outdoor reception power can be estimated using equation (1).

Next, the control unit 211A obtains the incident angle at which the reception power is maximum in the angular distribution $P0(\Theta, \Phi)$ of the outdoor reception power (step S3). The incident angle of the maximum reception power in the angular distribution $P0(\Theta, \Phi)$ of the outdoor reception power can be obtained by searching for the incident angle that gives the maximum value among all the reception power included in the angular distribution $P0(\Theta, \Phi)$ of the outdoor reception power. In this manner, the incident angle of the radio waves with respect to the window glass 11 and the array antenna 110 can be estimated.

Next, the control unit 211A reads out the second transmission characteristics for the plurality of interface layers 120 from the memory 211C, and selects the interface layer 120 that provides the maximum reception power at the incident angle of the radio waves estimated in step S3 (step S4). Step S4 allows the optimal interface layer 120 to be selected.

<One Example of Specific Method for Obtaining Power Angular Distribution $P(\Theta, \Phi)$ of Indoor Reception Power and Power Angular Distribution $P0(\Theta, \Phi)$ of Outdoor Reception Power>

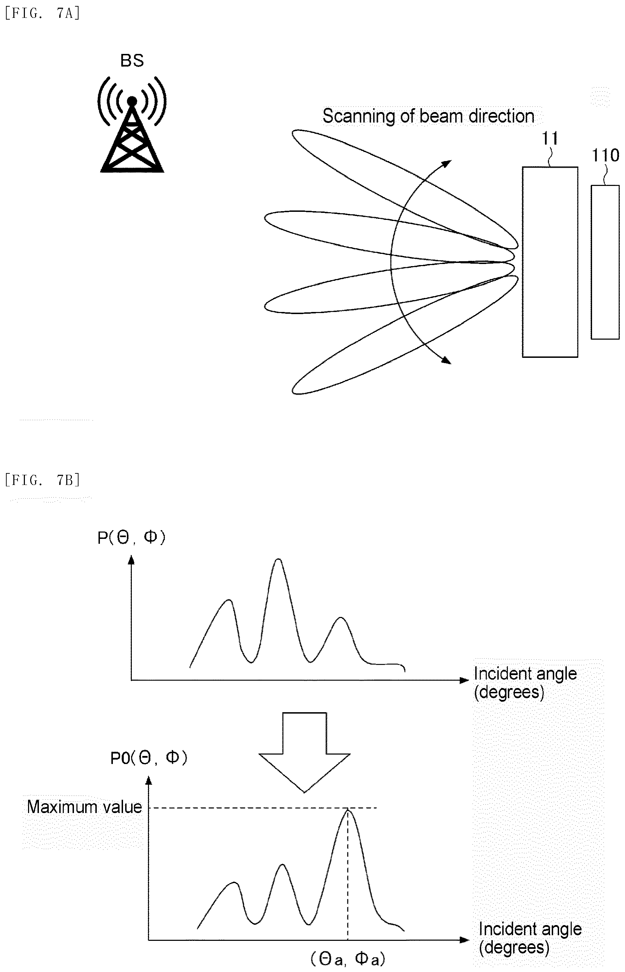

FIG. 7A is a diagram illustrating one example of a state of scanning of the beam angle in step S1. It is possible to scan the beam angle of the array antenna 110 arranged on the indoor side of the window glass 11 to obtain the angular distribution $P(\Theta, \Phi)$ of the indoor reception power. Note that, at such time, the beam angle is scanned without providing the interface layer 120 to the holder 130.

FIG. 7B is a diagram illustrating one example of the angular distribution $P(\Theta, \Phi)$ of indoor reception power and the angular distribution $P0(\Theta, \Phi)$ of outdoor reception power.

If substituting the angular distribution $P(\Theta, \Phi)$ of the indoor reception power obtained in step S1 and the attenuation angular distribution $A(\Theta, \Phi)$ into equation (1), it is possible obtain the angular distribution $P0(\Theta, \Phi)$ of the outdoor reception power shown on the bottom of FIG. 7B from the angular distribution $P(\Theta, \Phi)$ of the indoor reception power shown on the top of FIG. 7B.

As shown in FIG. 5, the transmittance of the first transmission characteristics decreases as the incident angle increases, and therefore the gain represented by the attenuation angular distribution $A(\Theta, \Phi)$ decreases as the incident angle increases. Therefore, the incident angle providing the maximum value of the reception power in the angular distribution $P(\Theta, \Phi)$ of the indoor reception power shown on the top of FIG. 7B can differ from the incident angle $(\Theta a, \Phi a)$ providing the maximum value of the reception power in the angular distribution $P0(\Theta, \Phi)$ of the outdoor reception power shown on the bottom of FIG. 7B.

The incident angle $(\Theta a, \Phi a)$ obtained in this manner is the incident angle of the radio waves providing the maximum reception power when the window glass 11 is not present.

Therefore, in step S4, the interface layer 120 that provides the maximum reception power at the incident angle $(\Theta a, \Phi a)$ estimated in step S3 in the second transmission characteristics for the plurality of interface layers 120 may be selected.

<Calculation Example of Angular Distribution $P0(\Theta,\Phi)$ of Outdoor Reception Power and Method for Selecting Interface Layer 120>

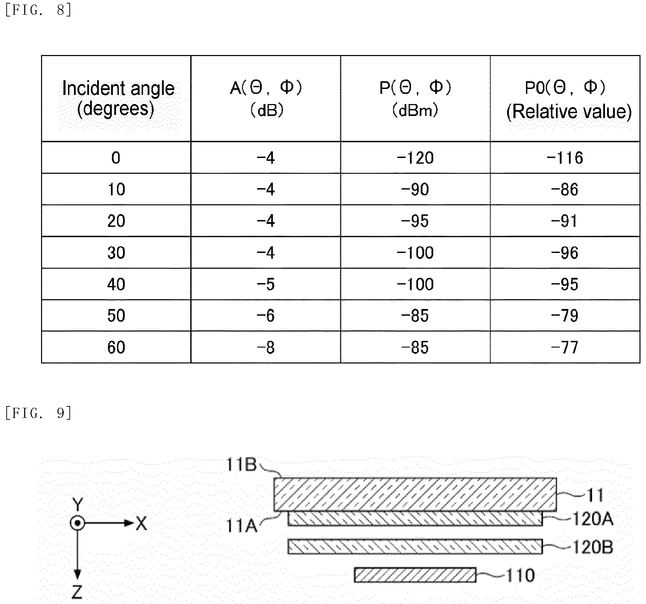

FIG. 8 is a diagram illustrating one example of calculation results of a simulation of an attenuation angular distribution $A(\Theta, \Phi)$, the power angular distribution $P(\Theta, \Phi)$ of indoor reception power, and the power angular distribution $P0(\Theta, \Phi)$ of outdoor reception power. FIG. 8 shows the calculation results for incident angles in the range from 0 degrees to 60 degrees. If the incident angle is too large, the attenuation of the transmittance of the radio waves when transmitted through the window glass 11 and the interface layer 120 becomes very large. Therefore, the upper limit of the incident angle is, for example, about 60 degrees to 70 degrees in absolute value for both the elevation angle $\Theta$ and the azimuth angle $\Phi$.

Here, for the sake of simplicity, the incident angle indicates the value of the azimuth angle $\Phi$ among the elevation angle $\Theta$ and the azimuth angle $\Phi$; however, the angular distribution $P(\Theta, \Phi)$ of the indoor reception power and the angular distribution $P0(\Theta, \Phi)$ of the outdoor reception power were calculated by varying both the elevation angle $\Theta$ and the azimuth angle $\Phi$ in increments of 10 degrees within the range from 0 degrees to 60 degrees. It should be noted that the interval by which the incident angle is shifted when calculating the angular distribution $P(\Theta, \Phi)$ of indoor reception power and the angular distribution $P0(\Theta, \Phi)$ of outdoor reception power is not limited to 10 degrees, and may be set to, for example, 3 degrees, 5 degrees, 15 degrees, etc.

The attenuation angular distribution $A(\Theta, \Phi)$ was calculated by changing both the elevation angle $\Theta$ and the azimuth angle $\Phi$ from 0 degrees to 60 degrees in increments of 10 degrees, and the results were -4 (dBm), -4 (dBm), -4 (dBm), -4 (dBm), -5 (dBm), -6 (dBm), and -8 (dBm). The gain (dB) of the attenuation angular distribution A($\Theta$, $\Phi$) decreased with increasing incident angle. Note that such an attenuation angular distribution A($\Theta$, $\Phi$) can be calculated by electromagnetic field simulation. Furthermore, the attenuation angular distribution A($\Theta$, $\Phi$) may be an actually measured value.

Additionally, for the angular distribution P($\Theta$, $\Phi$) of indoor reception power, the values of -120 (dBm), -90 (dBm), -95 (dBm), -100 (dBm), -100 (dBm), -85 (dBm), and -85 (dBm) were used as one example.

In such a case, when the angular distribution P0($\Theta$,$\Phi$) of the outdoor reception power was obtained, the values were -116 (dBm), -86 (dBm), -91 (dBm), -96 (dBm), -95 (dBm), -79 (dBm), and -77 (dBm).

From this result, it can be seen that when the incident angle is 60 degrees, a maximum value of -77 (dBm) can be obtained. The interface layer 120 selected on the basis of these results is as follows, using the two second transmission characteristics (dashed line and dash-dotted line) shown in FIG. 5. In FIG. 5, when the incident angle is 60 degrees, the gain of the second transmission characteristics of the interface layer 120 with a thickness of 2 mm, shown by the dash-dotted line, is greater than the gain of the second transmission characteristics of the interface layer 120 with a thickness of 4 mm, shown by the dashed line, and thus the interface layer 120 with a thickness of 2 mm is selected.

Comparing the first transmission characteristics (attenuation angular distribution A($\Theta$, $\Phi$)) shown by the solid line in FIG. 5 with the second transmission characteristics shown by the dash-dotted line, when the incident angle is 60 degrees, the gain of the second transmission characteristics shown by the dash-dotted line is approximately 3 dB larger, and thus, by inserting a 2 mm thick interface layer 120 into the holder 130, the reception power of the array antenna 110 can be increased by 3 dB.

Once the position of the optimal interface layer 120 has been determined, the layer can be inserted into the holder 130 and the wireless communication device 200 including the antenna device 100 can be used as a repeater.

<Effects>

This method for selecting an interface layer is a method for selecting an interface layer 120 of a wireless communication device 200, the wireless communication device including an antenna 110 that is provided to the window glass 11 and is capable of scanning a beam angle, the interface layer 120 which is provided to the window glass 11, and a control unit 211A, wherein the control unit 211A scans the beam angle of the antenna 110 and acquires a first angular distribution of the reception power of radio waves arriving from a base station BS with respect to the beam angle, estimates an incident angle of the radio waves on the basis of the first angular distribution, and selects the interface layer 120 that corresponds to estimation results of the incident angle. In this manner, the interface layer 120 is selected according to the incident angle of the radio wave estimated on the basis of the first angular distribution.

Therefore, it is possible to provide a method for selecting an interface layer that allows easy selection of an optimal interface layer 120.

Furthermore, the control unit 211A is provided to the window 10 having the window glass 11. Therefore, it is possible to provide a method for selecting an interface layer with which it is possible to easily select the optimal interface layer 120 in the wireless communication device 200 in which the control unit 211A is provided to the window 10.

The wireless communication device 200 further includes a memory 211C that stores first transmission characteristics that associate the type of the window glass 11, the incident angle on the window glass 11, and the transmittance of radio waves transmitted through the window glass 11, the control unit 211A estimates a second angular distribution of the reception power of the radio waves arriving from the base station BS with respect to the beam angle, in a state where the window glass 11 is not present, on the basis of the first angular distribution and the first transmission characteristics, and estimates the incident angle of the radio waves by using the second angular distribution. Therefore, it is possible to provide a method for selecting an interface layer with which the incident angle of the radio waves can be estimated using the second angular distribution of the reception power when the window glass 11 is not present, and the optimal interface layer 120 can be selected according to the incident angle when the window glass 11 is not present.

The memory 211C further stores second transmission characteristics that associate the type of the interface layer 120, the incident angle on the window glass 11, and the transmittance of radio waves transmitted through the window glass 11 and the interface layer 120, and the control unit 211A selects the interface layer 120 on the basis of the estimated incident angle and the second transmission characteristics. Therefore, it is possible to provide a method for selecting an interface layer with which it is possible to easily select the optimal interface layer 120 while taking into consideration the transmission characteristics of a plurality of types of interface layers 120.

The second transmission characteristics are transmission characteristics that associate the type of the window glass 11 and the interface layer 120, the incident angle on the window glass 11, and the transmittance of radio waves transmitted through the window glass 11 and the interface layer 120. Therefore, it is possible to provide a method for selecting an interface layer with which it is possible to easily select the optimal interface layer 120 while also taking into consideration the transmission characteristics of the window glass 11 in addition to the transmission characteristics of the plurality of types of interface layers 120.

The second transmission characteristics are transmission characteristics when the interface layer 120 is a first interface layer in close contact with the window glass 11, or a first interface layer disposed on the window glass 11 side, and the control unit 211A selects the first interface layer on the basis of the estimated incident angle and the second transmission characteristics. Therefore, it is possible to provide a method for selecting an interface layer with which it is possible to easily select the optimal interface layer 120 by using the second transmission characteristics when the interface layer 120 is in close contact with the window glass 11 or when is positioned on the window glass 11 side.

The second transmission characteristics are transmission characteristics that associate the incident angle on the window glass 11, and the transmittance of radio waves transmitted through the window glass 11 and the interface layer 120, for a plurality of interface layers 120 having different thicknesses and dielectric constants of the interface layers 120. Therefore, it is possible to provide a method for selecting an interface layer with which it is possible to easily select the optimal interface layer 120 while taking into consideration the thickness or dielectric constant of a plurality of types of interface layers 120.

The control unit 211A estimates an incident angle at which the reception power of the radio waves is maximum in the second angular distribution as the incident angle of the radio waves. Therefore, it is possible to provide for selecting an interface layer with which the direction of the maximum reception power when the window glass 11 is not present can be estimated as the incident angle, and the optimal interface layer 120 can be easily selected on the basis of the incident angle estimated in this manner.

Furthermore, the radio waves are millimeter wave band radio waves, and thus it is possible to provide a method for selecting an interface layer with which it is possible to select the optimal interface layer 120 that can be used in a wireless communication device as a repeater that relays millimeter wave band radio waves.

The antenna 110 and the control unit 211A are separated and are connected via a cable (not shown). Therefore, it is possible to provide a method for selecting an interface layer with which it is possible to easily select the optimal interface layer 120 in the separate-type wireless communication device 200 in which the array antenna 110 and control unit 211A are separated and easily installed on the window 10.

<Variations>

FIG. 9 is a diagram schematically illustrating one example of the positional relationship between window glass 11, interface layers 120A and 120B, and an array antenna 110 in a variation of the embodiment. The interface layer 120A is one example of a first interface layer, and interface layer 120B is one example of a second interface layer. Similarly to the interface layer 120 shown in FIG. 2B, the interface layers 120A and 120B are provided to adjust the electrical length of the radio waves incident on the array antenna 110 and match the impedance, and can be made of the same material as the interface layer 120 shown in FIG. 2B. The interface layers 120A and 120B may be the same type of interface layer, or may be different types of interface layers. The same type of interface layer refers to an interface layer having the same thickness and dielectric constant, and different interface layers that are not the same type refer to interface layers having different thicknesses or dielectric constants.

The interface layer 120A is in close contact with the window glass 11, and the interface layer 120B is disposed closer to the array antenna 110 side than the interface layer 120A. Note that the interface layer 120A is not limited to being in close contact with the window glass 11, but may be disposed on the window glass 11 side. The interface layer 120A being disposed on the window glass 11 side means that the interface layer 120A is disposed closer to the window glass 11 side than the interface layer 120B without being in close contact with the window glass 11.

In this manner, the wireless communication device 200 may include a plurality of interface layers 120A and 120B. In such a case, the second transmission characteristics may be the transmission characteristics for the two interface layers, i.e., the interface layer 120A and the interface layer 120B. The second transmission characteristics include transmission characteristics for a plurality of types of the interface layer 120A and a plurality of types of the interface layer 120B.

The control unit 211A may select the optimal interface layers 120A and 120B on the basis of the estimated incident angle and the second transmission characteristics of the two interface layers, i.e., the interface layers 120A and 120B. In such case, the second transmission characteristics of interface layer 120A and the second transmission characteristics of interface layer 120B may be separate data, or may be data representing single second transmission characteristic integrated for the two interface layers 120A and 120B.

Therefore, it is possible to provide a method for selecting an interface layer with which it is possible to easily select the optimal interface layer 120 while taking into consideration the second transmission characteristics of the plurality of types of interface layers 120A and 120B. Note that, in FIG. 9, the wireless communication device 200 has been described as including two interface layers 120A and 120B, but may include three or more interface layers.

Exemplary antenna devices of the present disclosure have been described above, the present disclosure is not limited to the specifically disclosed embodiment, and various variations and modifications are possible without departing from the scope of the claims.

It shall be noted that the present international application claims priority based on Japanese Patent Application No. 2023-020792 filed on February 14, 2023, the entirety of which is incorporated herein by reference.

[Description of Reference Signs]

1 Building
1A Wall
10 Window
11 Window glass
12 Window frame
100 Antenna device
110 Array antenna
120, 120A, 120B Interface layer
121 Matching unit
122 Wall part
130 Holder
140 Phase shifter
150 Waveguide (one example of transmission line)
200 Wireless communication device
210 Wireless device
211A Control unit
211B Relay unit
211C Memory (one example of storage unit)

**Claims**

1. A method for selecting an interface layer of a wireless communication device, the wireless communication device including an antenna that is provided to the window glass and is capable of scanning a beam angle, the interface layer which is provided to the window glass, and a control unit, wherein

   the control unit
   scans the beam angle of the antenna and acquires a first angular distribution of the reception power of radio waves arriving from a base station with respect to the beam angle,
   estimates an incident angle of the radio waves on the basis of the first angular distribution, and
   selects the interface layer that corresponds to estimation results of the incident angle.

2. The method for selecting an interface layer according to claim 1, wherein the control unit is provided to a window having the window glass or a wall around the window.

3. The method for selecting an interface layer according to claim 1, wherein the wireless communication device further includes a storage unit that stores first transmission characteristics that associate the type of the window glass, the incident angle on the window glass, and the transmittance of radio waves transmitted through the window glass,

   the control unit estimates a second angular distribution of the reception power of the radio waves arriving from the base station with respect to the beam angle, in a state where the window glass is not present, on the basis of the first angular distribution and the first transmission characteristics, and
   estimates the incident angle of the radio waves by using the second angular distribution.

4. The method for selecting an interface layer according to claim 3, wherein the storage unit further stores second transmission characteristics that associate the type of the interface layer, the incident angle on the window glass, and the transmittance of radio waves transmitted through the window glass and the interface layer, and
   the control unit selects the interface layer on the basis of the estimated incident angle and the second transmission characteristics.

5. The method for selecting an interface layer according to claim 4, wherein the second transmission characteristics are transmission characteristics that associate the type of the window glass and the interface layer, the incident angle on the window glass, and the transmittance of radio waves transmitted through the window glass and the interface layer.

6. The method for selecting an interface layer according to claim 4, wherein the second transmission characteristics are transmission characteristics when the interface layer is a first interface layer in close contact with the window glass, or a first interface layer disposed on the window glass side, and the control unit selects the first interface layer on the basis of the estimated incident angle and the second transmission characteristics.

7. The method for selecting an interface layer according to claim 4, wherein the second transmission characteristics are transmission characteristics when the interface layer is a first interface layer in close contact with the window glass, or two interface layers, i.e., a first interface layer disposed on the window glass side and a second interface layer disposed more on the antenna side than the first interface layer, and
   the control unit selects the first interface layer and the second interface layer on the basis of the estimated incident angle and the second transmission characteristics.

**8.** The method for selecting an interface layer according to claim 4, wherein the second transmission characteristics are transmission characteristics that associate the incident angle on the window glass, and the transmittance of radio waves transmitted through the window glass and the interface layer, for a plurality of interface layers having different thicknesses and dielectric constants of the interface layers.

**9.** The method for selecting an interface layer according to any one of claims 3-8, wherein the control unit estimates an incident angle at which the reception power of the radio waves is maximum in the second angular distribution as the incident angle of the radio waves.

**10.** The method for selecting an interface layer according to any one of claims 1-9, wherein the radio waves are millimeter band radio waves.

**11.** The method for selecting an interface layer according to any one of claims 1-10, wherein the antenna and the control unit are separated and are connected via a transmission line.

[FIG. 1]

[FIG. 2A]

[FIG. 2B]

[FIG. 3]

[FIG. 4]

[FIG. 5]

Gain (dB)

Incident angle (degrees)
(azimuth Φ)

First transmission characteristics of only window glass

Second transmission characteristics of window glass and matching layer (4 mm)

Second transmission characteristics of window glass and matching layer (2 mm)

[FIG. 6]

```
                    ┌─────────────┐
                    │    Start    │
                    └─────────────┘
                           │
                           ▼                          ╭─ S1
┌──────────────────────────────────────────────────────┐
│                                                        │
│    Acquire angular distribution P(Θ, Φ) of indoor      │
│    reception power (acquire angular distribution of    │
│    reception power of radio waves transmitted          │
│    through only window glass)                          │
│                                                        │
└──────────────────────────────────────────────────────┘
                           │
                           ▼                          ╭─ S2
┌──────────────────────────────────────────────────────┐
│                                                        │
│  Obtain angular distribution P0(Θ, Φ) of outdoor       │
│  reception power (obtain angular distribution of       │
│  reception power with respect to incident angle in     │
│  state in which window glass is not present)           │
│                                                        │
└──────────────────────────────────────────────────────┘
                           │
                           ▼                          ╭─ S3
┌──────────────────────────────────────────────────────┐
│                                                        │
│  Obtain incident angle of maximum reception power in   │
│  angular distribution P0(Θ, Φ) of outdoor reception    │
│  power (estimate incident angle of radio waves)        │
│                                                        │
└──────────────────────────────────────────────────────┘
                           │
                           ▼                          ╭─ S4
┌──────────────────────────────────────────────────────┐
│                                                        │
│                 Select matching layer                  │
│                                                        │
└──────────────────────────────────────────────────────┘
                           │
                           ▼
                    ┌─────────────┐
                    │     End     │
                    └─────────────┘
```

[FIG. 7A]

BS

Scanning of beam direction

11

110

[FIG. 7B]

P(Θ, Φ)

Incident angle
(degrees)

P0(Θ, Φ)

Maximum value

(Θa, Φa)

Incident angle
(degrees)

[FIG. 8]

| Incident angle (degrees) | A(Θ, Φ) (dB) | P(Θ, Φ) (dBm) | P0(Θ, Φ) (Relative value) |
|---|---|---|---|
| 0 | −4 | −120 | −116 |
| 10 | −4 | −90 | −86 |
| 20 | −4 | −95 | −91 |
| 30 | −4 | −100 | −96 |
| 40 | −5 | −100 | −95 |
| 50 | −6 | −85 | −79 |
| 60 | −8 | −85 | −77 |

[FIG. 9]

## INTERNATIONAL SEARCH REPORT

| International application No. |
| --- |
| **PCT/JP2024/003903** |

| A. | CLASSIFICATION OF SUBJECT MATTER |
| --- | --- |

*H01Q 19/06*(2006.01)i
FI:  H01Q19/06

According to International Patent Classification (IPC) or to both national classification and IPC

| B. | FIELDS SEARCHED |
| --- | --- |

Minimum documentation searched (classification system followed by classification symbols)

H01Q19/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | Microfilm of the specification and drawings annexed to the request of Japanese Utility Model Application No. 75031/1982 (Laid-open No. 178717/1983) (NIPPON TELEGRAPH & TELEPHONE) 30 November 1983 (1983-11-30) | 1-11 |
| A | JP 11-136023 A (NEC CORPORATION) 21 May 1999 (1999-05-21) | 1-11 |
| A | US 6014110 A (HUGHES ELECTRONICS CORPORATION) 11 January 2000 (2000-01-11) | 1-11 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 April 2024** | **16 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/003903**

| Patent document cited in search report | | | Publication date (day/month/year) | Patent family member(s) | Publication date (day/month/year) |
|---|---|---|---|---|---|
| JP | 58-178717 | U1 | 30 November 1983 | (Family: none) | |
| JP | 11-136023 | A | 21 May 1999 | (Family: none) | |
| US | 6014110 | A | 11 January 2000 | (Family: none) | |

Form PCT/ISA/210 (patent family annex) (July 2022)

**REFERENCES CITED IN THE DESCRIPTION**

**Patent documents cited in the description**

- WO 2019177144 A
- JP 2023020792 A